# EUROPÄISCHE PATENTSCHRIFT

(11) **EP 2 793 161 B1**
(45) Veröffentlichungstag und Bekanntmachung des Hinweises auf die Patenterteilung: **20.12.2017**
(21) Anmeldenummer: 14001238.6
(22) Anmeldetag: 03.04.2014
(51) Int. Cl.: G06F 21/55, G06F 21/77, G06K 19/073, G04R 20/14, H04L 29/06, H04W 12/12

(54) **Verfahren zur Klassifizierung eines Angriffs auf ein Sicherheitsmodul**
Method for classifying an attack on a security module
Procédé de classification d'une attaque sur un module de sécurité

(30) Priorität: 18.04.2013 DE 102013006669
(43) Veröffentlichungstag der Anmeldung: 22.10.2014
(73) Patentinhaber: Giesecke+Devrient Mobile Security GmbH, 81677 München (DE)
(72) Erfinder: Eckardt, Stefan, 82291 Mammendorf (DE); Stocker, Thomas, 81739 München (DE)

(56) Entgegenhaltungen:
- EP-A2- 1 229 409
- WO-A2-2006/000981
- DE-A1-102007 039 226
- US-A1- 2011 010 775
- US-A1- 2011 267 094

## Beschreibung

Die Erfindung betrifft ein gegen Manipulation besonders geschütztes Sicherheitsmodul, das einem Endgerät zugeordnet ist und zumindest eine geheimhaltungsbedürftige Datenoperation ausführt. Insbesondere betrifft die Erfindung Sicherheitsmodule in Form von Chipkarten oder (U) SIM-Karten, die in mobile Endgeräte eingesetzt werden, um u.a. einem Nutzer gegenüber einem Kommunikationsnetzbetreiber zu authentisieren.

Um z.B. Zugang zu einem Mobilfunknetz zu erlangen ist es bekannt, Sicherheitsmodule in Form von SIM-Karten zu verwenden, die in Handys eingesetzt werden. Die SIM-Karten authentisieren den Nutzer gegenüber dem Mobilfunknetz unter Verwendung mindestens eines Geheimnisses. Zur Wahrung des Geheimnisses sind die SIM-Karten gegen Angriffe durch Hard- und Softwaremaßnahmen besonders geschützt. Sie besitzen typischerweise einen Angriffserkennungsmechanismus mit einem Angriffszähler. Bei Erkennen eines Fehlerereignisses durch den Angriffserkennungsmechanismus wird der Angriffszähler erhöht. Überschreitet der Angriffszähler einen Grenzwert, werden Schutzmaßnahmen für das Sicherheitsmodul eingeleitet.

Ein Problem bei der Behandlung von Fehlerereignissen ist allerdings die Unterscheidung zwischen solchen Fehlerereignissen, die durch Manipulationsversuche bewirkt werden und solche Ereignisse, die im Rahmen des üblichen Betriebs liegen oder zufällig auftreten. Beispielsweise kann eine unerwartete Stromunterbrechung zufällig durch einen erschöpften Akku oder aber gezielt durch Manipulation der Stromzufuhr verursacht sein. Je nach Art des Angriffs müssen unterschiedliche Schutzmaßnahmen eingeleitet werden.

Zur Kategorisierung von Angriffen ist aus der WO 2012/126611 A1 der Vorschlag bekannt, nach einem erkannten Fehlerereignis die fehlerbedingte Ausfallzeit nach einem Reset und Reboot zu überprüfen und bei Unterschreiten einer vorgegebenen Neustart-Zeitspanne auf einen Angriff zu schließen. weiter wird vorgeschlagen, nach einem Fehlerereignis bedingten Neustart die Anzahl der ausgeführten Kommandos zu zählen und auf einen Angriff zu schließen, wenn bis zu einem erneuten Fehlerereignis nicht eine bestimmte Mindestanzahl von Kommandos ausgeführt wurde. Die Überwachung einer Zeitspanne bedingt die Zurverfügungstellung einer zuverlässigen Zeitbasis. Da SIM-Karten autonome Gebilde ohne eigene Energieversorgung sind, ist die Bereitstellung einer ausreichend zuverlässigen und sicheren Zeitbasis technisch anspruchsvoll.

Aus der US 2011/0010775 A1 ist für ein Sicherheitsmodul in Gestalt eines elektronischen Schaltkreises, der insbesondere in einer Smartcard eingesetzt werden soll, ein zeitbasiertes Verfahren zur Kategorisierung von Angriffen bekannt. Die Zeitbasis ist in Form einer Ladungsrückhalteeinheit auf dem Sicherheitsmodul bereitgestellt. Wesentliche Bauelemente der Ladungsrückhalteeinheit sind kapazitive Elemente die ein definiertes zeitabhängiges Entladeverhalten aufweisen. Die vorgeschlagene Anordnung ist aufwendig und muss zudem gegen Angriffe, die auf einer Störung von Ladungszuständen beruhen, besonders geschützt werden.

Aus der WO 2006/000981 A2 ist für ein Handy ein Verfahren zur Bestimmung einer Weltzeit bekannt für den Fall, daß das Handy nicht mehr über eine eigene Energieversorgung verfügt. Die vorgeschlagene Lösung beruht auf dem Ansatz, daß in GSM-Mobilfunknetzen die TDMA-Technik eingesetzt wird, deren Realisierung auf der Verwendung von festen Zeitfenstern basiert. Durch Zählen der Zeitfenster können Zeitabstände bestimmt wer den. Die Zeitabstände entsprechen Zeitabständen in Weltzeit. Auf diese Weise läßt sich eine zur Weltzeit analoge Zeitbasis bereitstellen, wenn auf dem Handy eine interne Zeitbasis nicht zur Verfügung steht.

Aus dem "Handbuch der Chipkarten" von W.Rankl, W.Effing, Hanser-Verlag München, 5. Auflage, sind Aufbau und Funktion von Sicherheitsmodulen im Sinne der Anmeldung bekannt, insbesondere anhand des Beispiels Chipkarte.

Es ist Aufgabe der Erfindung, für ein Sicherheitsmodul die Genauigkeit der Behandlung von Fehlerereignissen zu verbessern.

Diese Aufgabe wird gelöst durch ein Verfahren mit den Merkmalen des Hauptanspruchs sowie durch ein Sicherheitsmodul mit den Merkmalen des unabhängigen Gegenstandsanspruchs.

Das erfindungsgemäße Verfahren beruht auf dem Ansatz, im Sicherheitsmodul eine Zeitbasis in Weltzeit zu schaffen und den Angriffszähler zurückzusetzen, wenn bezogen auf die Weltzeitbasis eine bestimmte Bedingung erfüllt ist. Dem liegt die Erkenntnis zugrunde, dass mithilfe einer Weltzeitbasis eine sinnvolle Justierung des Angriffszählers auch dann möglich ist, wenn die Weltzeitbasis selbst relativ wenig genau ist. Für die Errichtung der Zeitbasis wird erfindungsgemäß ein Struktursignal verwendet, das dem Sicherheitsmodul aus einem anderen Grund in wiederkehrender Form im Rahmen seiner bestimmungsgemäßen Nutzung über seine Schnittstelle von einem Netzbetriebssystem übermittelt wird.

Das erfindungsgemäße Verfahren hat den Vorteil, dass es eine Beurteilung von Fehlerereignissen in einer Weltzeit erlaubt. Das Verfahren ist nahezu ohne schaltungstechnischen Zusatzaufwand in einem Sicherheitsmodul einrichtbar. Die Implementierung des erfindungsgemäßen Verfahrens in einem Sicherheitsmodul erhöht die Genauigkeit der Beurteilung von Fehlerereignissen. In vorteilhafter Weise liefert es ein Kriterium zum Rücksetzen des Angriffszählers, das zudem sehr zuverlässig ist. Dadurch wird eine zuverlässige Unterscheidung möglich zwischen Fehlerereignissen, die durch Manipulationsversuche bedingt sind und solchen, die zufällig oder im Rahmen der bestimmungsgemäßen Nutzung eines Sicherheitsmoduls auftreten. Der notwendige Sicherheitspuffer des Angriffszählers kann dadurch klein gehalten werden, was der Sicherheit zugute kommt.

Eine weitere Erhöhung der Sicherheit gegen Angriffe ergibt sich, indem das erfindungsgemäße Verfahren die Möglichkeit nimmt, eine autonome Zeitbasis eines Sicherheitsmoduls zu manipulieren. Bei der praktischen Nutzung des erfindungsgemäßen Verfahrens entsteht der weitere Vorteil, dass das unnötige Einleiten von Schutzmaßnahmen vermieden wird.

Ein weiterer Vorteil für das erfindungsgemäße Verfahren ergibt sich daraus, dass als Struktursignal für die Errichtung der Zeitbasis ein Signal verwendet werden kann, das über eine sichere Ende-zu-Ende-Verbindung von der signalerzeugenden Quelle zu dem Sicherheitsmodul übertragen wird und dadurch selbst gegen Angriffe bestmöglich geschützt ist.

In besonders vorteilhafter Weise wird als Struktursignal das AUTHENTICATE-Kommando verwendet, das in Mobilfunknetzen vom Netzbetreiber wiederkehrend an mit dem Netz verbundene Handys geschickt wird, um deren Authentisierung zu prüfen. Das AUTHENTICATE-Kommando wird über eine sichere Ende-zu-Ende-Verbindung von einem Netzbetriebssystem zu einem Sicherheitsmodul übertragen und ist faktisch nicht angreifbar.

Das erfindungsgemäße Sicherheitsmodul zeichnet sich dadurch aus, dass es die Durchführung des erfindungsgemäßen Verfahrens erlaubt und damit die entsprechenden Vorteile erzielt.

Unter Bezugnahme auf die Zeichnung wird nachfolgend ein Ausführungsbeispiel der Erfindung näher erläutert.

### Zeichnung:

Es zeigen
- Fig. 1: eine Blockdarstellung eines Systems zur Durchführung des erfindungsgemäßen Verfahrens,
- Fig. 2: ein Flussdiagramm des erfindungsgemäßen Verfahrens.

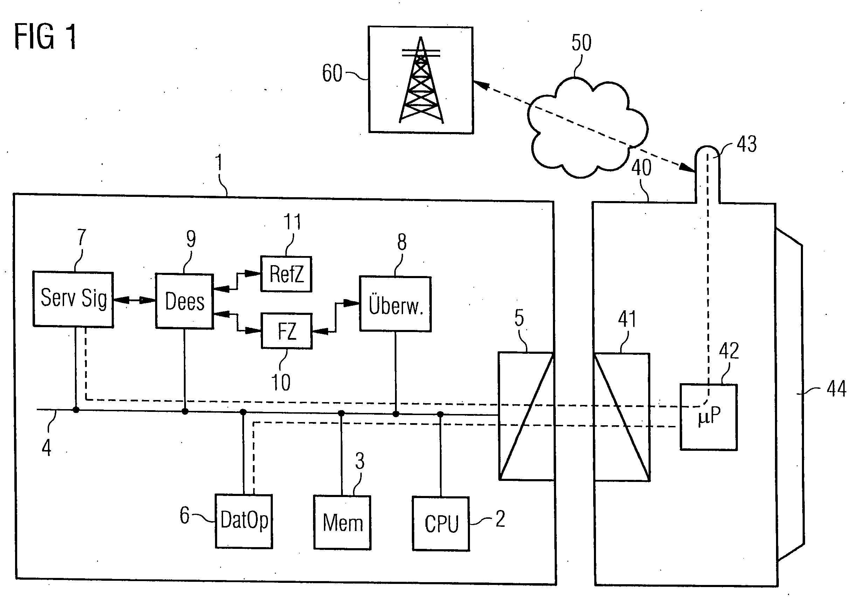

Fig.1 zeigt ein vereinfachtes Blockschaubild eines Systems, in dem ein Sicherheitsmodul 1 eingesetzt wird. Das System umfasst neben dem Sicherheitsmodul 1 ein Endgerät 40, ein Datennetz 50 sowie ein Netzbetriebssystem 60.

Das Sicherheitsmodul 1 kann die Gestalt einer SIM-Karte oder einer (U) SIM-Karte zur Verwendung in einem Handy haben. Andere Bau - und Ausführungsformen sind ebenso möglich. Unter anderem kann das Sicherheitsmodul 1 etwa in Gestalt eines fest mit einem Endgerät 40 verbundenen Bauelements ausgeführt sein, in Gestalt eines Tokens, z.B. eines USB-Tokens, in Gestalt eines Anhängers, z.B. eines Schlüsselanhängers, oder in Gestalt eines Bekleidungsstückes, z.B. einer Armbanduhr.

Das Endgerät 40 ist typischerweise ein Handy, kann aber auch ein Tablettcomputer oder ein anderes tragbares elektronisches Gerät sein, das von einem Benutzer jederzeit mitführbar ist.

Das Datennetz 50 ist insbesondere ein Mobilfunknetz, kann aber ebenso auch ein ganz oder teilweise drahtgebunden ausgeführtes Netz sein.

Das Netzbetriebssystem 60 wird vom Betreiber des Datennetzes 50 bereitgestellt. Der Netzbetreiber ist typischerweise ein Mobilfunkanbieter.

Die Komponenten 40,50 und 60 sind übliche Komponenten, deren Aufbau und Funktionsweise in der Fachwelt hinreichend bekannt ist.

Das Sicherheitsmodul 1 ist eine autonome Datenverarbeitungseinheit, die eingehende Signale mittels modulinterner Programme bearbeitet und Antworten erzeugt, die es an ein Endgerät 40 zurückgibt. Es ist baulich und logisch besonders gegen Manipulationsversuche und Angriffe geschützt. Das Sicherheitsmodul 1 verwaltet mindestens ein Geheimnis, das das Sicherheitsmodul 1 nicht verlassen darf, und führt damit eine geheimhaltungsbedürftige Operation aus. Typische Geheimnisse sind beispielsweise persönliche Nutzerdaten, etwa eine Adresse, eine Nutzer-Geheimzahl, etwa eine PIN, oder ein kryptographischer Schlüssel, etwa der private Schlüssel eines asymmetrischen Schlüsselpaares eines Public-Key-Verfahrens.

Das Sicherheitsmodul 1 verfügt über alle typischen Grundkomponenten eines Mikrocomputers. In Fig. 1 dargestellt sind eine zentrale Prozessoreinheit 2, eine Speichereinrichtung 3, ein Datenbus 4 sowie eine kontaktlos oder kontaktbehaftet arbeitende I/O-Schnittstelle 5. Die Darstellung aller Elemente des Sicherheitsmoduls 1 erfolgt dabei nur im Hinblick auf die hier beschriebene Erfindung. Sie versteht sich nicht als Vorgabe für eine praktische Realisierung. Diese wird in der Regel anders aussehen.

In der Speichereinrichtung 13 liegen in üblicher Weise insbesondere ein Betriebssystem sowie Anwendungsprogramme, die die Funktionalität des Sicherheitsmoduls 1 definieren. Die Anwendungen werden unter Steuerung der CPU 2 ausgeführt. Alle Komponenten 2,3, 5 sind über einen Datenbus 4 verbunden.

In der Regel besitzt das Sicherheitsmodul 1 keine oder allenfalls eine rudimentäre eigene Nutzerschnittstelle. Für die Kommunikation mit einem Nutzer nutzt das Sicherheitsmodul 1 die Nutzerschnittelle 44 des Endgerätes 40. Das Sicherheitsmodul 1 besitzt ferner keine eigene ständige Energieversorgung. Die Energieversorgung erfolgt typischerweise über die Schnittstelle 5. In einer Variante kann auf dem Sicherheitsmodul 1 eine Batterie oder ein anderer aufladbarer Energiespeicher vorgesehen sein, der zumindest vorübergehend eine Energieversorgung bereitstellt. In einer weiteren Variante kann das Sicherheitsmodul 1 eine separate Schnittstelle zur Energieversorgung zum Endgerät 40 oder zu einer anderen Einheit hin aufweisen.

An den Datenbus 4 sind weiterhin eine Komponente 6 zur Ausführung einer geheimhaltungsbedürftigen Datenoperation, eine Serversignalkomponente 7 zur Verarbeitung eines kryptographisch gesichert übertragenen Direktsignals von dem Netzbetriebssystem 60, eine Überwachungseinheit 8 sowie eine Deeskalationseinheit 9 angeschlossen. Mit der Überwachungseinheit 8 ist ein Angriffszähler 10 verbunden, auf den auch die Deeskalationseinheit 9 Zugriff hat. Mit der Deeskalationseinheit 9 ist weiter ein Referenzzähler 11 verbunden.

Die Datenoperationskomponente 6 verarbeitet Kommandos und Daten, die von dem Endgerät 40 kommen, und liefert Antworten zurück an das Endgerät 40. Sie führt dabei zumindest eine Operation aus, die geheimhaltungsbedürftig ist.

Die Serversignalkomponente 7 verarbeitet Direktsignale, die von dem Netzbetriebssystem 60 stammen, und bildet daraus Antworten. Zweckmäßig werden die Direktsignale und ebenso die dazu erzeugten Antworten ganz oder teilweise kryptographisch gesichert übertragen.

Die Überwachungseinheit 8 überwacht den Betrieb des Sicherheitsmoduls 1 auf Fehlerereignisse. Fehlerereignisse können beispielsweise Unterbrechungen der Energieversorgung des Sicherheitsmoduls 1, anomale Programmdurchläufe oder inkorrekte Checksummen über Programmcode oder Datenblöcke sein. Erkennt die Überwachungseinheit 8 ein Fehlerereignis, erhöht sie den Angriffszähler 10. Überschreitet der Angriffszähler 10 einen Grenzwert, veranlaßt die Überwachungseinheit 8 Schutzmaßnahmen. Eine Schutzmaßnahme kann z.B. die Stilllegung des Sicherheitsmoduls 1 oder die Einschränkung seines Funktionsumfangs sein; zudem kann über das Endgerät 40 die Ausgabe eine Warnmeldung erfolgen. Alternativ zum Hochzählen eines Angriffszählers kann auch ein runterzählen vorgesehen sein, bei dem der Angriffszähler bei einem definierten Startwert beginnt und Schutzmaßnahmen bei Erreichen des Wertes 0 eingeleitet werden.

Der Grenzwert für den Angriffszähler 10 ist so gewählt, dass Fehlereignisse, die im regulären Betrieb des Endgerätes 40 typischerweise zu erwarten sind, nicht zur Einleitung von Sicherheitsmaßnahmen führen. Ein typisches erwartbares Fehlereignis ist z.B. der plötzliche Ausfall der Energieversorgung aufgrund einer erschöpften Batterie. Andere erwartbare Fehlereignisse ergeben sich aus normalen Chip-Alterungserscheinungen. Charakteristisch für erwartbare Fehlereignisse ist, dass sie grundsätzlich sporadisch auftreten. Gleichwohl beinhaltet der Grenzwert regelmäßig einen gewissen Puffer, der erwartbare Fehlereignisse berücksichtigt. Der Ausgangswert für den Grenzwert ist deshalb regelmäßig > 1.

Die Überwachungseinheit 8 führt desweiteren eine - nachfolgend näher erläuterte - Routine durch, die darauf gerichtet ist, den Angriffszähler 10 wieder auf einen Startwert zurückzusetzen.

Die Deeskalationseinheit 9 überwacht die in der Serversignalkomponente 7 eingehenden Direktsignale von dem Netzbetriebssystem 60 darauf, ob ein bestimmtes Struktursignal auftritt. Ist das der Fall, erhöht die Deeskalationseinheit 9 den Referenzzähler 11. Dessen Stand vergleicht sie mit einem vorgegebenen Schwellwert, der in der Deeskalationseinheit 9 hinterlegt ist.

Das überwachte Struktursignal ist ein in Weltzeitabständen wiederkehrendes Signal. Eine Folge von zwei oder mehr eingegangenen Struktursignalen repräsentiert damit eine Zeitspanne in Weltzeit. Entsprechend repräsentiert der Schwellwert eine Zeitspanne in Weltzeit. Der Schwellwert wird so eingestellt, dass er einer Sicherheits-Zeitspanne entspricht. Als Sicherheits-Zeitspanne wird eine Zeitspanne festgelegt, innerhalb derer ein wiederholtes Auftreten von Fehlerereignissen als Manipulationsversuch gewertet wird. Für außerhalb der Sicherheits-Zeitspanne wiederholt auftretende Fehlerereignisse wird entsprechend davon ausgegangen, dass diese nicht auf einen Manipulationsversuch zurückzuführen sind.

Geeignete wiederkehrende Struktursignale sind insbesondere Signale, die zur Feststellung der Anwesenheit eines Kommunikationspartners dienen oder zum Nachweis seiner Kommunikationsberechtigung. Im Bereich Mobilfunk ist ein solches Struktursignal beispielsweise das ETSI/3-GPP-Kommando AUTHENTICATE. Das Kommando ist in den ETSI-Normen TS 133 102 V3.6.0 und TS 131102 V11.4.0 standardisiert. Es bewirkt die gegenseitige Authentisierung eines Sicherheitsmoduls 1 und eines Netzbetriebssystems 60 und wird in regelmäßigen oder situationsbedingten Abständen vom Netzbetriebssystem 60 ausgesendet.

Es kann vorgesehen sein, dass der Schwellwert adaptiv an eine Nutzungssituation, beispielsweise an ein jeweils gerade genutztes Datennetz 50, angepasst wird. Die Anpassung kann mittels Direktsignalen von einem Netzbetriebssystem 60 erfolgen.

Bei Überschreiten des Schwellwertes veranlaßt die Deeskalationseinheit 9 das Zurücksetzen des Angriffszählers 10 auf seinen Ausgangswert. Hierzu führt die Deeskalationseinheit 9 eine nachfolgend näher beschriebene Routine durch, die darauf gerichtet ist, den Angriffszähler 10 wieder zurückzusetzen.

Das Endgerät 40 weist eine zu der Schnittstelle 5 des Sicherheitsmoduls 1 korrespondierende Schnittstelle 41 auf, die mit einem Mikroprozessor 42 verbunden ist. Desweiteren besitzt das Endgerät 40 eine ebenfalls mit dem Mikroprozessor 42 verbundene zweite Schnittstelle 43 zu dem Datennetz 50 hin. Weiterhin verfügt das Endgerät 40 über eine Nutzerschnittstelle 44, die typischerweise eine Anzeige sowie Eingabemittel umfasst.

Der Mikroprozessor 42 des Endgerätes 40 verfügt über alle Elemente eines typischen Computers und steuert alle Komponenten 41, 42, 43, 44 des Endgerätes 40. Der Mikroprozessor 42 führt Programme aus, die dem Endgerät 40 seine Funktionalität verleihen.

Das Netzbetriebssystem 60 basiert auf einem Server, der über das Datennetz 50 gleichzeitig eine Mehrzahl von Datenverbindungen zu Endgeräten 40 unterhalten und verwalten kann.

Das Sicherheitsmodul 1 kommuniziert, wie durch gestrichelte Linien angedeutete, über die Schnittstellen 5,41 zum einen mit dem Endgerät 40, zum anderen - über das Endgerät 40 - mit dem Netzbetriebssystem 60. Die Kommunikation über die die Schnittstellen 5, 41 ist zweckmäßig mit einer eigenen kryptographischen Sicherung gegen Abhören und Manipulation gesichert und erfolgt unter Verwendung eines geeigneten Datenübertragungsprotokolls. Die kryptographische Sicherung wird im Endgerät 40 angebracht und im Sicherheitsmodul 1 wieder entfernt und umgekehrt. Methoden und Umsetzung geeigneter kryptographischer Sicherungstechniken sowie geeignete Datenübertragungsprotokolle sind bekannt.

Zwischen Sicherheitsmodul 1 und Endgerät 40 werden Anwendungsdaten ausgetauscht, die im Sicherheitsmodul 1 insbesondere von der Datenoperationskomponente 6 verarbeitet werden. Die Anwendungsdaten werden in der Regel von einem Nutzer erzeugt oder unter seiner Regie bereitgestellt und an das Sicherheitsmodul 1 übertragen. Die Datenoperationskomponente 6 erzeugt Antwortdaten und gibt sie an das Endgerät 40 zurück. Beispielsweise können im Sicherheitsmodul 1 von einem Nutzer übergebene Daten in mittels eines Geheimnisses abgesicherter Weise gespeichert werden oder das Sicherheitsmodul 1 führt mit oder aufgrund von erhaltenen Anwendungsdaten eine geheimhaltungsbedürftige Operation aus und gibt eine Antwort an das Endgerät 40 zurück.

Vom Netzbetriebssystem 60 werden weiterhin bestimmte Signale über das Datennetz 50 und über das Endgerät 40 direkt an das Sicherheitsmodul 1 gesendet. Das Endgerät 40 fungiert für solche Direktsignale grundsätzlich als transparente Durchleitungseinrichtung. D.h. das Endgerät 40 leitet empfangene Direktsignale unverändert über die Schnittstelle 41 an das Sicherheitsmodul 1 weiter. Allenfalls entfernt es vor Weiterleitung an das Sicherheitsmodul 1 ein von dem Netzbetriebssystem 60 angebrachte kryptographische Sicherung zur Absicherung der Datenübertragung zwischen Netzbetriebssystem 60 und Endgerät 40 über das Datennetz 50. Ggf. passt das Endgerät 40 ferner empfangene Direktsignale an ein für die Schnittstelle 41 erforderliches Protokoll an.

Zu an das Sicherheitsmodul 1 übertragenen Direktsignalen erzeugt dieses Direktantworten, die in analoger Weise in umgekehrter Richtung unverändert über das Datennetz 50 an das Netzbetriebssystem 60 zurückübertragen werden.

Zumindest ein Direktsignal dient typischerweise dazu, das Sicherheitsmodul 1 - und damit dessen Nutzer - gegenüber dem Netzbetriebssystem 60 zu identifizieren und zu authentisieren. Andere Direktsignale dienen dazu, die Funktionsweise des Sicherheitsmoduls 1 zu steuern.

In der Regel werden Direktsignale und ebenso Direktantworten kryptographisch gesichert übertragen. Zwischen Netzbetriebssystem 60 und Sicherheitsmodul 1 wird dazu eine sichere Ende-zu-Ende-Verbindung aufgebaut.

Einige Direktsignale werden wiederkehrend übertragen. Im Bereich Mobilfunk gilt dies etwa für das ETSI/3-GPP-Kommando AUTHENTICATE. Das Kommando verfügt über einen MAC-Anteil und ist gegen Replay-Attacken gesichert. Auf ein empfangenes AUTHENTICATE-Kommando antwortet das Sicherheitsmodul 1 immer mit einem Authentisierungsantwortsignal. Das AUTHENTICATE-Kommando wird in turnusmäßigen Abständen vom Netzbetriebssystem 60 an das Sicherheitsmodul 1, typischerweise eine (U) SIM-Karte geschickt. Die Turnusabstände können dabei festgelegt sein oder vom Verhalten des Nutzers oder von durch das Netz vorgegebenen Randbedingungen abhängen; sie variieren zudem je nach Netzbetreiber 60. Typischerweise liegen die Turnusabstände zwischen 30 Minuten und 12 Stunden.

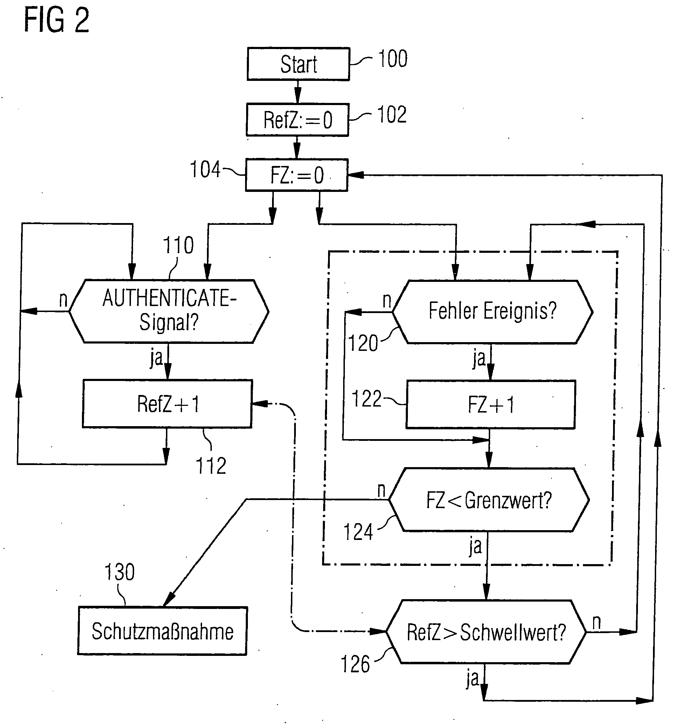

Fig. 2 veranschaulicht den Ablauf des auf das Rücksetzen des Angriffszählers gerichteten Verfahrens, das in der Überwachungseinheit 8 bzw. in der Deeskalationseinheit 9 ausgeführt wird. Es werden folgende Annahmen getroffen: das Sicherheitsmodul 1 ist eine SIM-Karte, das Endgerät 40 ist ein Handy, das Datennetz 50 ist ein Mobilfunknetz und das Netzbetriebssystem 60 ist ein Mobilfunkserver, der wiederkehrend ein AUTHENTICATE-Kommando aussendet.

Das Verfahren setzt ein, Schritt 100, indem die SIM-Karte 1 aktiviert wird.

Auf die Aktivierung hin wird zunächst in Schritt 102 der Referenzzähler 11 (RefZ) auf seinen Ausgangswert gesetzt, typischerweise auf den Wert Null.

Desweiteren wird, Schritt 104, der Angriffszähler 10 (FZ) auf seinen Ausgangswert zurückgesetzt, im Beispiel auf den Wert Null. Die Ausführung der Schritte 102 und 104 kann nacheinander oder gleichzeitig erfolgen.

Nachfolgend beginnt die Deeskalationseinheit 9 mit der Ausführung einer Schleife, in der sie in einem ersten Schritt 110 prüft, ob in der Serversignalkomponente 7 ein AUTHENTICATE-Signal eingegangen ist. Ist es das nicht der Fall, wiederholt sie Schritt 110 unmittelbar.

Stellt die Deeskalationseinheit 9 in Schritt 110 fest, dass ein AUTHENTICATE-Signal eingegangen ist, erhöht sie in Schritt 112 den Referenzzähler 11. Anschließend führt sie erneut die mit Schritt 110 beginnende Schleife aus.

Parallel zu der von der Deeskalationseinheit 9 ausgeführten Routine startet nach Ausführung des Schrittes 104 die Überwachungseinheit 8 eine zweite Schleife, in deren erstem Schritt 120 sie prüft, ob ein Fehlerereignis aufgetreten ist.

Ist das der Fall, erhöht die Überwachungseinheit 8 in Schritt 122 den Angriffszähler 10.

Anschließend führt sie einen Schritt 124 aus, in dem geprüft wird, ob der Angriffszähler 10 einen Grenzwert noch nicht überschritten hat.

Wird in Schritt 120 festgestellt, dass kein Fehlerereignis aufgetreten ist, führt die Überwachungseinheit 8 anschließend unmittelbar Schritt 124 aus.

Ergibt sich in Schritt 124, dass der Angriffszähler 10 einen Grenzwert überschritten hat, stellt die Überwachungseinheit 8 einen Manipulationsversuch fest und leitet eine Schutzmaßnahme ein, Schritt 130. Die Schutzmaßnahme kann etwa darin bestehen, dass das Sicherheitsmodul 1 seinen Betrieb abbricht oder einschränkt.

Die Schritte 102 bis 124 bilden, wie durch die gestrichelte Einfassung angedeutet, die Grundfunktion der Überwachungseinheit 8. Der nachfolgende Schritt 126 wird durch die Deeskalationseinheit 9 bereitgestellt.

Ergibt sich bei der Prüfung in Schritt 124, dass der Angriffszähler 10 einen Grenzwert nicht überschritten hat, führt anschließend die Deeskalationseinheit 9 Schritt 126 aus, in dem sie prüft, ob der Referenzzähler 11 einen Schwellwert überschritten hat.

Ist das der Fall, stellt die Deeskalationseinheit 9 fest, dass eventuell gezählte Fehlerereignisse nicht auf Manipulationsversuche zurückgehen und führt Schritt 104 aus, um den Angriffszähler 10 auf seinen Ausgangswert zurückzusetzen

Ergibt die Prüfung in Schritt 126, dass der Referenzzähler 11 den Schwellwert noch nicht erreicht hat, startet die ausgeführte Programmschleife durch Ausführung des Schrittes 120 durch die Überwachungseinheit 8 von neuem.

Ohne den Rahmen der Grundidee zu verlassen gestattet die erfindungsgemäße Lösung eine Reihe von fachgerechten Ausgestaltungen. Typischerweise werden die Funktionen von Überwachungseinheit 8 und Deeskalationseinheit 9 als Softwarekomponenten bereitgestellt. Als solche können sie auf vielfältige Weise in den Komponenten des Sicherheitsmoduls 1 realisiert sein; insbesondere können sie in Form einer einzigen Komponente ausgeführt und müssen sie nicht als eigene Module realisiert sein. Anstelle des AUTHENTICATE-Kommandos können selbstverständlich andere Struktursignale zur Steuerung des Referenzzählers 11 herangezogen werden, sofern sie in sinnvollen Abständen wiederholt werden. Desweiteren versteht sich, dass das Sicherheitsmodul 1 weitere Komponenten aufweisen kann und dass die dargestellten Komponenten logisch und technisch in anderer Weise realisiert werden können. Dasselbe gilt für das Endgerät 40 und das Netzbetriebssystem 60. Ohne weiteres ist weiter möglich, mehrere Angriffszähler vorzusehen, die ggf. in gestufter Weise Schutzmaßnahmen auslösen.

## Patentansprüche

1. Verfahren zum Rücksetzen eines Angriffszählers in einem Sicherheitsmodul ohne ständige eigene Energieversorgung, das einen Datenaustausch mit einem Endgerät ausführt und zumindest ein von einem Netzbetriebssystem übertragenes Direktsignal verarbeitet, mit den Schritten:
Überwachen des Betriebs des Sicherheitsmoduls (1) auf Fehlerereignisse, Erhöhen eines Angriffszählers (10) bei Erkennen eines Fehlerereignisses, Einleiten einer Schutzmaßnahme, wenn der Angriffszähler (10) einen Grenzwert überschreitet,
**gekennzeichnet durch** folgende Schritte:
Überwachen des Betriebs des Sicherheitsmoduls (1) auf den Eingang eines Struktursignals von einem Netzbetriebssystem (60),
wobei das Struktursignal die Anforderung einer Antwort ist, die dem Netzbetriebssystem (60) eine Identifizierung, eine Authentisierung oder die Feststellung der Anwesenheit des Sicherheitsmoduls (1) erlaubt,
Erhöhen eines Referenzzählers (11) bei jedem Eingang eines Struktursignals, Rücksetzen des Angriffszählers (10) auf einen Ausgangsweit, wenn der Referenzzähler (11) einen Schwellwert erreicht und der Angriffszähler (10) den Grenzwert noch nicht überschritten hat.

2. Verfahren nach Anspruch 1, **dadurch gekennzeichnet, dass** das Sicherheitsmodul (1) zumindest eine geheimhaltungsbedürftige Datenoperation ausführt.

3. Verfahren nach Anspruch 1, **dadurch gekennzeichnet, dass** das Struktursignal über eine sichere Ende-zu-Ende-Verbindung von dem Netzbetriebssystem (60)zu dem Sicherheitsmodul (1) übertragen wird.

4. Verfahren nach Anspruch 1, **dadurch gekennzeichnet, dass** das Struktursignal in Abständen wiederholt übertragen wird.

5. Verfahren nach Anspruch 1, **dadurch gekennzeichnet, dass** das Struktursignäl ein Authentisierungskommando ist.

6. Verfahren nach Anspruch 1, **dadurch gekennzeichnet, dass** das Struktursignal ein AUTHENTICATE-Kommando ist.

7. Verfahren nach Anspruch 1, **dadurch gekennzeichnet, dass** das Struktursignal kryptographisch gesichert übertragen wird.

8. Autonomes Sicherheitsmodul ohne ständige eigene Energieversorgung, mit:
- einer Schnittstelle (5) zum Austausch von Daten mit einem Endgerät (40),
- einer Komponente (6) zur Ausführung wenigstens einer geheimhaltungsbedürftigen Datenoperation,
- einer Serversignalkomponente (7) zur Verarbeitung eines von einem Netzbetriebssystem (60) übertragenen Direktsignales,
- einer Überwachungseinheit (8) zur Überwachung des Betriebs auf Fehlerereignisse,
- einem mit der Überwachungseinheit (8) verbundenen Angriffszähler (10), wobei die Überwachungseinheit (8) dazu eingerichtet ist, den Angriffszähler (10) bei Erkennen eines Fehlerereignisses zu erhöhen und ggf. Schutzmaßnahmen einzuleiten,
**dadurch gekennzeichnet, dass**
das Sicherheitsmodul (1) weiterhin eine Deeskalationseinheit (9) zur Überwachung auf Eingang eines Struktursignals von einem Netzbetriebssystem (60) sowie einen mit der Deeskalationseinheit (9) verbundene Referenzzähler (11) aufweist,
wobei das überwachte Struktursignal die Anforderung einer Antwort ist, die dem Netzbetriebssystem (60) eine Identifizierung, eine Authentisierung oder die Feststellung der Anwesenheit des Sicherheitsmoduls (1) erlaubt, undwobei die Deeskalationseinheit (9) dazu eingerichtet ist, den Referenzzähler (11) bei jedem Eingang eines bestimmten Struktursignals von einem Netzbetriebssystem (60) zu erhöhen und den Angriffszähler (10) auf einen Ausgangswert zurückzusetzen, wenn der Referenzzähler (11) einen Schwellwert erreicht hat und der Angriffszähler (10) einen Grenzwert noch nicht überschritten hat.

9. Sicherheitsmodul nach Anspruch 8, **dadurch gekennzeichnet, dass** die Überwachungseinheit (8) und die Deeskalationseinheit (9) als Komponenten der zentralen Steuereinheit (2) ausgebildet sind.

## Claims

1. A method for resetting an attack counter in a security module without permanent power supply of its own which executes a data exchange with a terminal and processes at least one direct signal transferred by a network operating system, with the steps of:
monitoring the operation of the security module (1) for error events, incrementing an attack counter (10) upon detection of an error event, initiating a protective measure when the attack counter (10) exceeds a limit, **characterized by** the following steps of:
monitoring the operation of the security module (1) for the input of a structure signal of a network operating system (60),
wherein the structure signal is the request for a response permitting to the network operating system (60) an identification, an authentication or the determination of the presence of the security module (1),
incrementing a reference counter (11) upon each input of a structure signal,
resetting the attack counter (10) to an initial value when the reference counter (11) reaches a threshold value and the attack counter (10) has not yet exceeded the limit.

2. The method according to claim 1, **characterized in that** the security module (1) executes at least one data operation requiring secrecy.

3. The method according to claim 1, **characterized in that** the structure signal is transferred from the network operating system (60) to the security module (1) via a secure end-to-end connection.

4. The method according to claim 1, **characterized in that** the structure signal is repeatedly transferred at intervals.

5. The method according to claim 1, **characterized in that** the structure signal is an authentication command.

6. The method according to claim 1, **characterized in that** the structure signal is an AUTHENTICATE command.

7. The method according to claim 1, **characterized in that** the structure signal is transferred in cryptographically secured manner.

8. An autonomous security module without permanent power supply of its own, with:
- an interface (5) for exchanging data with a terminal (40),
- a component (6) for executing at least one data operation requiring secrecy,
- a server signal component (7) for processing a direct signal transferred by a network operating system (60),
- a monitoring unit (8) for monitoring the operation for error events,
- an attack counter (10) connected to the monitoring unit (8), wherein the monitoring unit (8) is adapted to increment the attack counter (10) upon detection of an error event and to initiate protective measures if required,
**characterized in that**
the security module (1) further has a de-escalation unit (9) for monitoring for the input of a structure signal of a network operating system (60), as well as a reference counter (11) connected to the de-escalation unit (9),
wherein the monitored structure signal is the request for a response permitting to the network operating system (60) an identification, an authentication or the determination of the presence of the security module (1), and wherein the de-escalation unit (9) is adapted to increment the reference counter (11) upon each input of a certain structure signal of a network operating system (60), and to reset the attack counter (10) to an initial value when the reference counter (11) has reached a threshold value and the attack counter (10) has not yet exceeded a limit.

9. The security module according to claim 8, **characterized in that** the monitoring unit (8) and the de-escalation unit (9) are formed as components of the central control unit (2).

## Revendications

1. Procédé de réinitialisation d'un compteur d'attaques dans un module de sécurité sans propre alimentation constante en énergie qui exécute un échange de données avec un terminal et qui, au moins, traite un signal direct transmis par un système d'exploitation de réseau, comprenant les étapes :
surveillance du fonctionnement du module de sécurité (1) pour discerner s'il y a des événements erreur,
incrémentation d'un compteur d'attaques (10) lors de la reconnaissance d'un événement erreur, déclenchement d'une mesure de protection quand le compteur d'attaques (10) dépasse une valeur seuil,
**caractérisé par** les étapes suivantes :
surveillance du fonctionnement du module de sécurité (1) pour discerner s'il y a entrée d'un signal de structure d'un système d'exploitation de réseau (60),
cependant que le signal de structure est la demande d'une réponse qui permet au système d'exploitation de réseau (60) une identification, une authentification ou la constatation de la présence du module de sécurité (1),
incrémentation d'un compteur de référence (11) lors de chaque entrée d'un signal de structure, réinitialisation du compteur d'attaques (10) sur une valeur initiale quand le compteur de référence (11) atteint une valeur seuil et que le compteur d'attaques (10) n'a pas encore dépassé la valeur limite.

2. Procédé selon la revendication 1, **caractérisé en ce que** le module de sécurité (1) exécute au moins une opération sur des données requérant un maintien au secret.

3. Procédé selon la revendication 1, **caractérisé en ce que** le signal de structure est transmis par l'intermédiaire d'une connexion sécurisée de bout en bout du système d'exploitation de réseau (60) au module de sécurité (1).

4. Procédé selon la revendication 1, **caractérisé en ce que** le signal de structure est transmis de manière réitérée à intervalles.

5. Procédé selon la revendication 1, **caractérisé en ce que** le signal de structure est une commande d'authentification.

6. Procédé selon la revendication 1, **caractérisé en ce que** le signal de structure est une commande AUTHENTICATE.

7. Procédé selon la revendication 1, **caractérisé en ce que** le signal de structure est transmis de manière cryptographiquement sécurisée.

8. Module de sécurité autonome sans propre alimentation constante en énergie, comprenant :
- une interface (5) destinée à l'échange de données avec un terminal (40),
- un composant (6) destiné à l'exécution d'au moins une opération sur des données requérant un maintien au secret,
- un composant de signal de serveur (7) destiné au traitement d'un signal direct transmis par un système d'exploitation de réseau (60),
- une unité de surveillance (8) destinée à la surveillance du fonctionnement pour discerner s'il y a des événements erreur,
- un compteur d'attaques (10) relié à l'unité de surveillance (8), cependant que l'unité de surveillance (8) est conçue pour incrémenter le compteur d'attaques (10) lors de la reconnaissance d'un événement erreur et pour déclencher éventuellement des mesures de protection,
**caractérisé en ce que**
le module de sécurité (1) comporte en outre une unité de désescalation (9) destinée à la surveillance pour discerner s'il y a entrée d'un signal de structure d'un système d'exploitation de réseau (60), ainsi qu'un compteur de référence (11) relié à l'unité de désescalation (9),
cependant que le signal de structure surveillé est la demande d'une réponse qui permet au système d'exploitation de réseau (60) une identification, une authentification ou la constatation de la présence du module de sécurité (1),
et cependant que l'unité de désescalation (9) est conçue pour incrémenter le compteur de référence (11) lors de chaque entrée d'un signal de structure déterminé d'un système d'exploitation de réseau (60) et pour réinitialiser le compteur d'attaques (10) sur une valeur initiale quand le compteur de référence (11) a atteint une valeur seuil et que le compteur d'attaques (10) n'a pas encore dépassé une valeur limite.

9. Module de sécurité selon la revendication 8, **caractérisé en ce que** l'unité de surveillance (8) et l'unité de désescalation (9) sont réalisées en tant que composants de l'unité centrale de commande (2).
